Europäisches Patentamt

**European Patent Office**

Office européen des brevets

(11) Numéro de publication: **0 015 840**
A1

# (12) DEMANDE DE BREVET EUROPEEN

(21) Numéro de dépôt: **80400288.9**

(22) Date de dépôt: **29.02.80**

(51) Int. Cl.³: **A 01 F 12/44**

---

(30) Priorité: **02.03.79 FR 7905458**

(43) Date de publication de la demande: **17.09.80**
**Bulletin 80/19**

(84) Etats contractants désignés: **AT BE CH DE GB IT LU NL SE**

(71) Demandeur: **Société Anonyme dite: Etablissements Belin, F-10290 Marcilly Le Hayer (FR)**
Demandeur: **Belin, Bernard-Paul, 62, rue Emile Zola, F-10000 Troyes (FR)**

(72) Inventeur: **Belin, Bernard, 62, rue Emile Zola, F-10000 Troyes (FR)**

(74) Mandataire: **Nony, Michel, 29, rue Cambacérès, F-75008 Paris (FR)**

---

(54) **Batteuse pour céréales.**

(57) Batteuse comportant un premier organe de nettoyage (7) à la sortie des organes de battage et un second organe de nettoyage (17) à un niveau inférieur au premier constituant un ensemble monobloc, fixé de façon articulée sur la batteuse, et animé d'un mouvement de va-et-vient vertical et/ou horizontal.

EP 0 015 840 A1

ACTORUM AG

0015840

# Batteuse pour céréales

La présente invention a pour objet un perfectionnement aux batteuses pour céréales, et notamment aux moissonneuses-batteuses.

Dans la suite de la description, on utilisera généralement l'expression "moissonneuse-batteuse", mais il convient de noter que cette expression englobe ici, par convention, des machines qui n'accompliraient que les fonctions de batteuses.

On sait que les moissonneuses-batteuses comportent, fixés sur un châssis, des organes de coupe, d'alimentation, de battage et de nettoyage, ainsi qu'un organe moteur et des équipements annexes de transmission et de réglages.

Les organes de coupe comprennent une barre de coupe équipée de diviseurs et un rabatteur destiné à maintenir la récolte entre le moment où elle est coupée et celui où elle est prise en charge par les organes d'alimentation.

Les organes d'alimentation comprennent de façon classique une vis sans fin destinée à rassembler la récolte sur une largeur inférieure à la largeur de la coupe, et un convoyeur, par exemple un tapis roulant muni de barrettes transversales, qui monte en pente douce jusqu'aux organes de battage. Les organes de battage sont constitués par exemple par un cylindre monté sur un arbre horizontal, et dont la surface est munie de doigts ou pointes disposés en quinconce avec les doigts ou pointes équivalents de l'organe complémentaire appelé contre-batteur. Les organes de battage peuvent être précédés d'un enfonce-paille, et peuvent être suivis d'un tire-paille et d'un séparateur rotatif.

A la sortie des organes de battage les grains mélangés d'impuretés sont pris en charge par des organes de nettoyage qui opèrent un triage par densité et par calibrage, tandis que la paille chemine le long de tables de secouage permettant de récupérer les grains qui sont restés mélangés à la paille.

Les organes de nettoyage du grain proprement dits comprennent généralement un ensemble supportant deux grilles sensiblement horizontales disposées l'une au-dessus de l'autre et animées de mouvements de va-et-vient. Un courant d'air refoulé par un ventilateur traverse cet ensemble d'avant en arrière. Sous l'effet de cette ventilation les impuretés légères sont rejetées à l'arrière, tandis que le grain et les impuretés lourdes traversent la grille supérieure. La grille inférieure possédant des trous dont la dimension correspond à la taille moyenne des grains récoltés permet de séparer les grains des "otons", c'est-à-dire des grains encore munis de leurs balles ou des fragments d'épis qui sont recyclés. Le bon grain ayant traversé la grille inférieure est pris en charge par une vis élévatrice qui le conduit à une trémie ou à un ensacheur situé dans la partie supérieure de la machine.

Les organes de nettoyage sont donc relativement complexes et nécessitent la présence de nombreux dispositifs de transmission et de réglage.

La présente invention a pour objet une moissonneuse-batteuse qui évite ces inconvénients.

La moissonneuse-batteuse de l'invention, du type comportant, à la sortie des organes de battage, des secoueurs laissant passer le grain et retenant et faisant avancer la paille, un premier organe de nettoyage par calibrage, ou grille supérieure laissant passer le grain et diverses impuretés telles que les otons, et à un niveau inférieur à celui dudit premier organe de nettoyage, un second organe de nettoyage comprenant un réceptacle en pente recueillant les grains et impuretés provenant dudit premier organe de nettoyage et les convoyant vers une grille inférieure dont le calibre des trous correspond à la taille des grains, et un organe de collecte situé sous ladite grille permettant de recueillir le grain ayant traversé celle-ci et de le conduire vers des organes d'évacuation, caractérisée par le fait que lesdits premier et second organes de nettoyage constituent un ensemble monobloc, ledit ensemble monobloc étant fixé de façon articulée sur la batteuse par le fait que la grille supérieure joue en même temps le rôle de secoueur, et par le fait que ladite batteuse comporte des moyens d'actionnement permettant d'animer ledit ensemble monobloc d'un mouvement de va-et-vient vertical, et/ou horizontal. Ainsi, la batteuse de l'invention ne comporte pas de table de secouage (au sens classique) distincte de la grille supérieure.

La présente invention a aussi pour objet une batteuse pour céréales, notamment du type décrit ci-dessus, comportant, fixés sur un châssis, des organes de battage et de nettoyage, ainsi qu'un organe moteur et des équipements de transmission et de réglage, ladite batteuse comportant, à la sortie des organes de battage un premier organe de nettoyage par calibrage, retenant la paille et laissant passer le grain, caractérisée par le fait qu'elle comporte, à un niveau inférieur à celui dudit premier organe de nettoyage, un second organe de nettoyage comprenant un réceptacle en pente recueillant les grains et impuretés provenant dudit premier organe de nettoyage et les convoyant vers une grille inférieure dont le calibre des trous correspond à la taille des grains, un organe d'aspiration, situé au-dessus de ladite grille, capable de créer à travers elle un courant d'air dirigé de bas en haut, et permettant d'éliminer les menues pailles et autres éléments légers tandis que le grain traverse la grille par calibrage et gravité, ledit organe d'aspiration étant immobile par rapport au châssis de la batteuse auquel il est fixé.

-4-

Généralement la grille inférieure est une grille réglable à trous ronds, de diamètre et de densité variables, et est fixée de façon amovible.

Selon un mode de réalisation particulier, l'organe d'aspiration comporte, dans une bouche d'aspiration, dont l'extrémité inférieure débouche au-dessus de ladite grille inférieure, des pales montées sur un arbre rotatif, lesdites pales permettant de créer dans ladite bouche d'aspiration et au voisinage de son extrémité inférieure, un courant d'air dirigé, au niveau de la grille inférieure, de bas en haut, et des moyens moteurs pour actionner ledit arbre porteur de pales. A la sortie de l'organe d'aspiration se trouve un conduit d'évacuation des menues pailles et autres impuretés légères.

L'invention a également pour objet une moissonneuse-batteuse notamment du type décrit ci-dessus, dans laquelle les éléments classiques de nettoyage tels que les secoueurs et la grille supérieure sont remplacés par un organe unique, correspondant au premier organe de nettoyage mentionné ci-dessus, et comprenant sur un support monobloc, une grille antérieure, située à la sortie et en-dessous de l'organe de battage, en pente descendante douce d'avant en arrière, et une grille postérieure en pente montante douce d'avant en arrière, ladite grille postérieure étant munie sur sa face supérieure d'éléments en saillie du type doigts ou écopes, dont la pente est dans le même sens, mais plus accentuée, que la pente de la grille postérieure.

Selon un mode de réalisation préféré, la batteuse de l'invention présente encore les caractéristiques suivantes, prises isolément ou en combinaison :

- lesdits moyens d'actionnement comportent du côté avant deux bielles latérales fixées chacune à un élément du châssis de la machine, et du côté arrière, un villebrequin, animé par des moyens moteurs appropriés;

- l'organe de collecte situé sous la grille inférieure n'est pas solidaire dudit ensemble monobloc mais reste immobile par rapport au châssis auquel il est fixé.

L'invention va maintenant être décrite plus en détail en faisant référence au dessin annexé dans lequel :

- la figure 1 représente une vue schématique d'un mode de réalisation particulier d'une moissonneuse-batteuse selon l'invention;

- la figure 2 représente une vue en coupe selon II-II de la figure 1;

- la figure 3 représente une vue en coupe selon III-III de la figure 2;

- la figure 4 représente une vue en coupe selon IV-IV de la figure 2;

- et la figure 5 représente une vue partielle en perspective du second organe de nettoyage et de l'organe d'évacuation des grains.

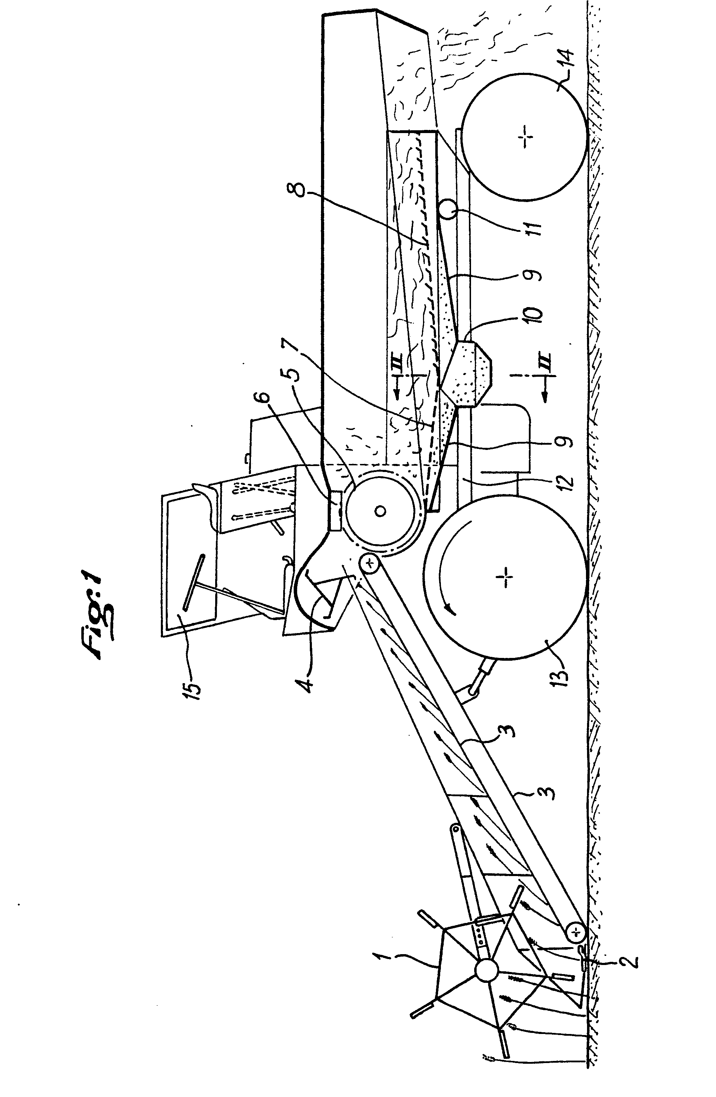

En faisant référence à la figure 1, la moissonneuse-batteuse représentée comporte un rabatteur 1 à cinq pales, de hauteur et d'avancement réglables, une barre de coupe 2, classique, du type faucheuse à dents sous-faucillées (largeur 1, 80 mètre), un tapis convoyeur 3 (largeur 1 mètre) muni de barrettes transversales, un enfonce-paille 4, un ensemble batteur 5 - contre batteur 6, à doigts, que la récolte aborde par le haut. On a découvert qu'avec ces dimensions, la vis de concentration est inutile. A la sortie du batteur le grain et la paille mélangés tombent sur la grille antérieure 7 (largeur 1 Mètre) réglable à trous ronds, puis sur une grille postérieure 8 (largeur 1 mètre) du type dit à double nez, de taille et densité variables suivant le type de récolte. Les deux grilles antérieure et postérieure sont amovibles et fixées sur un support monobloc.

Les grains ayant passé à travers le système de grilles 7 et 8 tombent sur le réceptacle 9. Par sa pente, le réceptacle 9 conduit les grains ayant traversé les grilles 7 et 8 vers la trémie inférieure 10 qui constitue un second organe de nettoyage.

On voit notamment sur les figures 1 et 2 que le premier et le second organes de nettoyage, c'est-à-dire le support des grilles 7 et 8, le réceptacle 9, la trémie inférieure 10, la paroi de fond 16 et le support de la grille 17 constituent un ensemble monobloc.

Pour favoriser le passage du grain à travers les grilles et l'avancement de la paille vers l'arrière de la machine, cet ensemble monobloc est articulé à l'avant par une bielle non représentée fixée au châssis de la machine et à l'arrière par un villebrequin schématisé par 11, et est ainsi animé d'un double mouvement de va-et-vient.

Grâce aux éléments en saillie de la grille 8 la paille est chassée vers l'extérieur à l'arrière de la machine.

Le grain ainsi que quelques éléments étrangers (terre, menues pailles, etc...) sont réceptionnés dans la trémie 10.

La machine est montée sur un châssis dont un élément est représenté par 12.

La machine comprend en outre des roues avant motrices jumelables 13, des roues arrières directrices 14, un moteur schématisé par 15, et une cabine de pilotage. La transmission des mouvements est effectuée par des systèmes de poulies

0015840

et de courroies (non représentés).

La transmission de la manoeuvre des différents éléments réglables ou de débrayage est effectuée par une tringlerie ou par un système de commande hydraulique (non représenté).

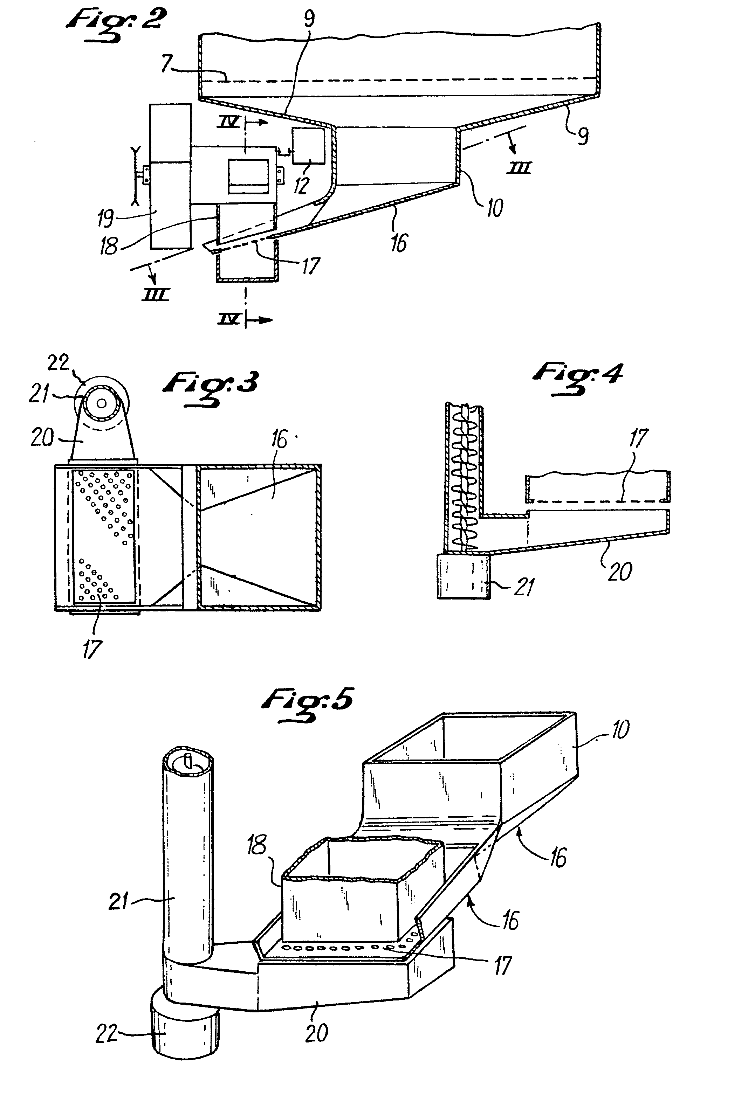

En faisant référence aux figures 2 à 5, on voit que le réceptacle 9 conduit à la trémie 10 dont le fond 16 est plat et incliné en pente douce et prolongé par la grille 17 à trous ronds, de diamètre et densité variables, suivant la récolte. On voit notamment sur les figures 3 et 5 que la paroi de fond 16 comporte un étranglement latéral.

Au-dessus de la grille 17 se trouve une bouche d'aspiration 18 aspirant l'air de bas en haut à travers la grille 17, grâce à un système moteur-aspirateur représenté par 19. L'organe d'aspiration est fixé au châssis. Il n'est pas solidaire des organes de secouage et est immobile par rapport au châssis.

A ce niveau, et tenant compte du fait que la grille 17 est animée d'un mouvement alternatif horizontal et vertical, le grain est traversé par un courant d'air vertical dirigé de bas en haut qui permet d'éliminer les menues pailles et tout autre élément plus léger que le grain.

D'autre part, le calibre de la grille 17 est prévu en fonction de la taille du grain, celui-ci la traversera donc pour être réceptionné dans un auget 20. Tout autre élément plus gros que le grain (pierre, etc..) sera rejeté à l'extérieur en bout de grille 17.

L'auget 20 qui est immobile par rapport au châssis conduit par sa pente le grain vers une vis élévatrice 21 (actionnée par une courroie grâce au renvoi d'angle 22), qui se termine à sa sortie supérieure par un ensacheur à double bouche (non représenté) permettant la mise en sac directe du grain.

0015840

Cette moissonneuse-batteuse peut être utilisée notamment pour la récolte et/ou le battage des céréales, notamment du riz, et aussi du blé, en particulier en parcelles d'essai.

0015840

## Revendications de brevet

1. Batteuse pour céréales, notamment moissonneuse-batteuse, comportant, fixés sur un châssis, des organes de battage ainsi qu'un organe moteur et des équipements de transmission et de réglage, ladite batteuse comportant, à la sortie des organes de battage, des secoueurs laissant passer le grain et retenant et faisant cheminer la paille, un premier organe de nettoyage par calibrage, ou grille supérieure laissant passer le grain et diverses impuretés, et, à un niveau inférieur à celui dudit premier organe de nettoyage, un second organe de nettoyage comprenant un réceptacle en pente recueillant les grains et impuretés provenant dudit premier organe de nettoyage et les convoyant vers une grille inférieure dont le calibre des trous correspond à la taille des grains, et un organe de collecte, situé sous ladite grille inférieure, permettant de recueillir le grain ayant traversé celle-ci et de le conduire vers des organes d'évacuation, caractérisée par le fait que ladite grille supérieure joue en même temps le rôle de secoueur par le fait que lesdits premier et second organes de nettoyage constituent un ensemble monobloc, ledit ensemble monobloc étant fixé de façon articulée sur la batteuse, et par le fait que ladite batteuse comporte des moyens d'actionnement permettant d'animer ledit ensemble monobloc d'un mouvement de va-et-vient vertical et/ou horizontal.

2. Batteuse selon la revendication 1, caractérisée par le fait que ledit ensemble monobloc comprend des supports pour les grilles et des moyens pour fixer lesdites grilles de façon amovible.

3. Batteuse selon l'une quelconque des revendications précédentes, caractérisée par le fait que ladite grille inférieure est une grille réglable à trous ronds, de diamètre et de densité variables.

0015840

4. Batteuse selon l'une quelconque des revendications précédentes, caractérisée par le fait que ledit second organe de nettoyage comprend en outre un organe d'aspiration situé au-dessus de la grille inférieure, capable de créer, à travers elle, un courant d'air dirigé de bas en haut et permettant d'éliminer les menues pailles et autres éléments légers, tandis que le grain traverse la grille inférieure par calibrage et gravité, ledit organe d'aspiration étant immobile par rapport au châssis de la batteuse auquel il est fixé.

5. Batteuse selon la revendication 4, caractérisée par le fait que ledit organe d'aspiration comporte, dans une bouche d'aspiration, dont l'extrémité inférieure débouche au-dessus de ladite grille inférieure, des pales montées sur un arbre rotatif, lesdites pales permettant de créer dans ladite bouche d'aspiration un courant d'air dirigé, au niveau de la grille inférieure, de bas en haut, et des moyens moteurs pour actionner ledit arbre porteur de pales.

6. Batteuse selon l'une quelconque des revendications 4 et 5, caractérisée par le fait que ledit organe d'aspiration comporte, à sa sortie, un conduit d'évacuation des menues pailles et autres impuretés légères.

7. Batteuse selon l'une quelconque des revendications précédentes, caractérisée par le fait que ledit premier organe de nettoyage comprend, sur un support monobloc, une grille antérieure, située à la sortie et au-dessous de l'organe de battage, en pente descendante douce d'avant en arrière, et une grille postérieure en pente montante douce d'avant en arrière, ladite grille postérieure étant munie sur sa face supérieure, d'éléments en saillie du type doigts ou écopes, dont la pente est dans le même sens, mais plus accentuée, que la pente de ladite grille postérieure.

0015840

-11-

8. Batteuse selon l'une quelconque des revendications précédentes, caractérisée par le fait que lesdits moyens d'actionnement comportent du côté avant deux bielles latérales fixées chacune à un élément du châssis de la machine, et du côté arrière un villebrequin.

9. Batteuse selon la revendication 8, caractérisée par le fait que l'organe de collecte situé sous la grille inférieure n'est pas solidaire dudit ensemble monobloc mais reste immobile par rapport au châssis auquel il est fixé.

0015840

*Fig.1*

1,2

Fig. 2

Fig. 3

Fig. 4

Fig. 5

0015840

**RAPPORT DE RECHERCHE EUROPEENNE**

Office européen des brevets

00.15840

Numéro de la demande

EP 80 40 0288

| Catégorie | Citation du document avec indication, en cas de besoin, des parties pertinentes | Revendication concernée |
|---|---|---|
| | <u>GB - A - 620 429</u> (**CHAUVIN**) <br> * L'ensemble * <br><br> -- | 1-4,6 |
| | <u>DE - C - 29 756</u> (RICHTER) <br> * L'ensemble * <br><br> -- | 1 |
| | <u>BE - A - 335 220</u> (KUNERT & NEUGE-BAUER) <br> * Page 2, paragraphes 5 et 6 * <br><br> -- | 1,4,5, 6 |
| | <u>FR - A - 1 062 993</u> (GUILLEMIN) <br> * Page 2, colonne de droite, paragraphes 3 et 5 * <br><br> -- | 4,6,9 |
| | <u>FR - A - 1 160 987</u> (BARRANDON) <br> * Page 1, colonne de droite, paragraphe 4 * <br><br> -- | 8 |
| A | <u>FR - A - 1 103 873</u> (LANZ) <br> * Page 1, colonne de droite, paragraphes 4 et 5; résumé 2b * <br><br> ---- | 1-4 |

## DOCUMENTS CONSIDERES COMME PERTINENTS

**CLASSEMENT DE LA DEMANDE (Int. Cl. 3)**

A 01 F 12/44

**DOMAINES TECHNIQUES RECHERCHES (Int. Cl. 3)**

A 01 F
A 01 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-05-1980 | DE LAMEILLEURE |

OEB Form 1503.1  06.78